# EUROPÄISCHE PATENTSCHRIFT

(11) **EP 3 981 993 B1**
(45) Veröffentlichungstag und Bekanntmachung des Hinweises auf die Patenterteilung: **17.04.2024**
(21) Anmeldenummer: 21200170.5
(22) Anmeldetag: 30.09.2021
(51) Int. Cl.: F16B 39/24

(54) **SICHERUNGSSCHEIBE FÜR EINE SCHRAUBVERBINDUNG SOWIE SCHRAUBVERBINDUNG**
SCREW CONNECTION AND LOCKING WASHER FOR A SCREW CONNECTION
DISQUE DE BLOCAGE POUR UNE LIAISON BOULONNÉE, AINSI QUE LIAISON BOULONNÉE

(30) Priorität: 07.10.2020 DE 102020126247
(43) Veröffentlichungstag der Anmeldung: 13.04.2022
(73) Patentinhaber: Adolf Schnorr GmbH & Co. KG, 71069 Sindelfingen (DE)
(72) Erfinder: Seyboldt, Christoph, 70190 Stuttgart (DE)
(74) Vertreter: Mammel und Maser Patentanwälte PartG mbB

(56) Entgegenhaltungen:
- EP-A1- 0 426 895
- WO-A1-03/091583
- DE-A1- 2 053 582
- DE-A1- 2 556 985
- DE-A1- 2 811 108
- DE-U1-202009 011 269
- US-A- 2 034 494

## Beschreibung

Die Erfindung betrifft eine Sicherungsscheibe für eine Schraubverbindung zwischen einem Schraubteil und einem Bauteil sowie eine Schraubverbindung, bei welcher ein Schraubteil an einem Bauteil unter Zwischenschaltung einer Sicherungsscheibe befestigbar ist.

Aus der AT 207 179 B und der DE 44 25 837 A1 sind Sicherungsscheiben, insbesondere gezahnte Sicherungsscheiben bekannt. Eine solche Sicherungsscheibe umfasst einen ringförmigen Scheibenkörper, der durch einen Außenrand und einen konzentrisch dazu verlaufenden Innenrand begrenzt ist. In dem Scheibenkörper ist eine Aufnahmebohrung vorgesehen, die durch den Innenrand begrenzt ist, um ein Schraubteil aufzunehmen. Dieser Scheibenkörper umfasst eine obere und untere Ringfläche, die jeweils an der oberen und unteren Ringfläche durchgängig eine Verzahnung aufweisen. Dieser Scheibenkörper weist an seiner oberen Ringfläche zwischen der Verzahnung und dem Innenrand eine Abflachung auf. Gegenüberliegend ist an der unteren Ringfläche zwischen der Verzahnung und dem Außenrand ebenfalls eine Abflachung vorgesehen. Die Sicherungsscheibe ist tellerfederartig gewölbt, das heißt, dass der Scheibenkörper aufgestellt ist. Vor dem Anziehen einer Schraubverbindung liegt die Sicherungsscheibe in ungespanntem Zustand mit der an der äußeren umlaufenden Rand angrenzenden Abflachung an einem Bauteil auf. Die an der inneren umlaufenden Rand angrenzenden Abflachung auf der Oberseite der Sicherungsscheibe liegt an einem Schraubenkopf an.

Solche Sicherungsscheiben haben sich im Einsatz bewährt. Insbesondere Schraubverbindungen, bei welchen die Härte des Bauteils auf einem Niveau größer 200 HV liegt.

Aus der DE 10 2005 054 471 A1 ist eine Schraubensicherung für eine Schraubverbindung bekannt. Diese Schraubensicherung umfasst zwei Keilscheiben, welche jeweils an den aufeinander zuweisenden Stirnseiten ein keilförmiges Profil aufweisen. An jeder Außenseite der Keilscheiben ist ein Verdrehsicherungsprofil vorgesehen. Diese Schraubensicherung erfordert immer zwei Scheiben zur Sicherung der Schraubverbindung, die im Hinblick auf das keilförmige Profil aufeinander abzustimmen sind, sodass diese zur Sicherung ineinander eingreifen. Eine analoge Ausbildung der Schraubensicherung ist aus der US 4,134,438 A bekannt.

Die US 2009/0036224 A offenbart ein Verfahren zur Herstellung einer solchen vorgenannten Schraubverbindung, bestehend aus einem Keilscheiben-Sicherungspaar.

Aus der WO 03/091583 A1 ist eine selbstsichernde Befestigungseinrichtung in Form eines ringförmigen Scheibenkörpers bekannt. Dieser weist an einer oberen Ringfläche einem Innenrand zugeordnet und an einer unteren Ringfläche einem Außenrand zugeordnet ein Rippenprofil auf. Die Rippenprofile an der Oberseite und der Unterseite der Ringfläche erstrecken sich nur teilweise über die Breite der Ringfläche des Scheibenkörpers.

Aus der EP 0 426 895 A1 sowie der DE 25 56 985 A1 gehen verschiedene Ausführungsformen von Rippenprofilen für nicht aufgestellte Sicherungsscheiben hervor.

Aus der US 2 034 494 A ist ein Sicherungselement bekannt. Dieses Sicherungselement weist einen ringförmigen Körper mit einem S-förmigen Querschnitt auf. Am jeweiligen stirnseitigen Ende des S-förmigen Querschnitts ist eine Verzahnung vorgesehen.

Aus der DE 28 11 108 A1 ist eine Sperrzahnscheibe bekannt, bei welcher sich auf der oberen und der unteren Ringfläche über die gesamte Breite sich kreisförmig ausgebildete Sperrzähne erstrecken.

Die DE 20 2009 011 269 U1 offenbart eine Sicherungsscheibe, welche zum Verspannen zwischen einem Befestigungselement und einem Schraubteil vorgesehen ist.

Aus der DE 2 053 582 A1 ist eine federnde und geschlitzte Unterlegscheibe für Verschraubungen bekannt.

Die Anforderung an solche Schraubverbindungen steigen an und erfordern auch eine Sicherung einer Schraubverbindung bei einem Bauteil mit einer weichen Oberfläche, wie beispielsweise Aluminium oder einer reduzierten Auflagefläche des Schraubteils, wie beispielsweise bei Langlöchern.

Der Erfindung liegt deshalb die Aufgabe zugrunde, eine Sicherungsscheibe sowie eine Schraubverbindung vorzuschlagen, durch welche ein hinreichender Form- und Kraftschluss zwischen der Sicherungsscheibe und dem Bauteil bzw. zwischen dem Schraubteil und dem Bauteil unter Zwischenschaltung der Sicherungsscheibe ermöglicht wird.

Diese Aufgabe wird durch eine Sicherungsscheibe für eine Schraubverbindung zwischen einem Schraubteil und einem Bauteil gelöst, bei welcher die Verzahnung an der oberen Ringfläche sich innerhalb eines verzahnten Bereichs erstreckt, welcher voll umfänglich ausgebildet ist und bei welcher eine Breite des verzahnten Bereichs an der oberen Ringfläche kleiner als die Breite des Scheibenkörpers zwischen dem Außenrand und des Innenrandes ist und bei welcher an der oberen Ringfläche zwischen dem verzahnten Bereich und dem Außenrand ein unverzahnter Bereich ausgebildet ist.

Dies ermöglicht, dass bei der Herstellung einer Schraubverbindung bei gleicher Vorspannkraft der Schraubverbindung eine kleinere Flächenpressung auf den unteren Schraubpartner durch die Sicherungsscheibe aufgebracht wird, wodurch sich die Verzahnung auf der unteren Ringfläche der Sicherungsscheibe in einem zur Sicherung der Schraubverbindung erforderlichen Maße in die weiche Oberfläche des Bauteils eingräbt. Gleichzeitig erfolgt ein Eingraben der Verzahnung auf der oberen Ringfläche der Sicherungsscheibe in das Schraubteil, wodurch ein vollständiger Form- und Kraftschluss der Schraubverbindung erzielt wird.

Des Weiteren ist bevorzugt vorgesehen, dass die Breite des verzahnten Bereiches an der oberen Ringfläche kleiner als die Breite der verzahnten an der unteren Ringfläche ausgebildet ist.

Bevorzugt ist vorgesehen, dass der auf der oberen Ringfläche ausgebildete verzahnte Bereich als ein umlaufender Streifen ausgebildet ist und ein unverzahnter Bereich auf der oberen Ringfläche ausgebildet ist, der sich vollumfänglich erstreckt und als Streifen ausgebildet ist. Dadurch ist an der oberen Ringfläche des Scheibenkörpers eine Kombination aus einem verzahnten Bereich und einem unverzahnten Bereich vorgesehen. Diese beiden Bereiche sind vorzugsweise vollumfänglich und streifenförmig ausgebildet.

Bevorzugt ist vorgesehen, dass der verzahnte Bereich auf der oberen Ringfläche des Scheibenkörpers von dem unverzahnten Bereich zumindest einseitig umgeben ist. Somit ist insbesondere der Bereich des Scheibenkörpers mit einem verzahnten Bereich versehen, der bei der Herstellung einer Schraubverbindung mit dem Schraubteil zusammenwirkt.

Gemäß einer bevorzugten Ausführungsform der Sicherungsscheibe ist vorgesehen, dass der verzahnte Bereich an der oberen Ringfläche an den Innenrand des Scheibenkörpers angrenzt und sich nur teilweise bis zum Außenrand erstreckt und von dem unverzahnten Bereich begrenzt ist, der sich von dem verzahnten Bereich bis zum Außenrand erstreckt. Somit sind nur zwei voneinander abweichende Bereiche auf der oberen Ringfläche gebildet.

Gemäß einer bevorzugten Ausführungsform der oberen Ringfläche der Sicherungsscheibe ist vorgesehen, dass die Breite des verzahnten Bereichs größer als die des unverzahnten Bereichs ist. Dadurch kann ein erhöhter Formschluss erzielt werden. Gemäß einer alternativen Ausführungsform kann vorgesehen sein, dass für einige Anwendungsfälle die Breite des verzahnten Bereichs und die des unverzahnten Bereichs auf der oberen Ringfläche des Scheibenkörpers gleich ausgebildet sind. Bei besonders weichen Oberflächen des Bauteils kann vorgesehen sein, dass eine Sicherungsscheibe eingesetzt wird, bei der die Breite des verzahnten Bereichs kleiner als die des unverzahnten Bereichs ist.

Gemäß einer weiteren bevorzugten Ausgestaltung einer Sicherungsscheibe ist vorgesehen, dass diese einen aufgestellten Scheibenkörper aufweist, bei der ein Innenrand gegenüber dem Außenrand erhöht ausgebildet ist, wobei im ungespannten Zustand der Außenrand der unteren Ringfläche an dem Bauteil aufliegt und der Innenrand der oberen Ringfläche an dem Schraubteil anliegend vorgesehen ist. Dadurch kann die Sicherungsscheibe tellerfederartig im Querschnitt gesehen ausgebildet sein und zusätzlich eine Vorspannkraft bei der Herstellung der Schraubverbindung bewirken.

Eine weitere vorteilhafte Ausgestaltung der Sicherungsscheibe sieht vor, dass die untere Ringfläche an den Außenrand angrenzend eine Abflachung aufweist, welche eine äußere kreisrunde Begrenzung für die Verzahnung an der unteren Ringfläche bildet, welches sich zum Innenrand erstreckt. Eine solche Abflachung kann in Analogie auf der oberen Ringfläche an den Innenrand angrenzend vorgesehen sein. Dies ermöglicht ein verbessertes Aufbringen der Vorspannkraft zu Beginn der Befestigung des Schraubteils zum Bauteil.

Eine weitere bevorzugte Ausführungsform der Sicherungsscheibe sieht vor, dass der Scheibenkörper aus einem Federstahl oder einem hochfesten oder warmfesten oder korrosionsbeständigen Stahl, insbesondere Stahl mit korrosionsbeständigen Nickelbasislegierungen, hergestellt ist, der vorzugsweise eine Härte von größer 200 HV aufweist.

Die der Erfindung zugrundeliegende Aufgabe wird des Weiteren durch eine Schraubverbindung mit einem Bauteil und einem dazu befestigbaren Schraubteil, welches als eine Schraube oder eine Schrauben-/Mutter-Kombination ausgebildet ist sowie zumindest einer zwischen dem Bauteil und dem Schraubteil positionierten Sicherungsscheibe gelöst, bei der eine Sicherungsscheibe nach einem der vorbeschriebenen Ausführungsformen eingesetzt wird. Eine Schraubverbindung mit einer solchen Sicherungsscheibe kann sowohl für Langlochverbindungen, vergrößerte Durchgangslöcher als auch bei weichen Oberflächen von einem Bauteil eingesetzt werden, um eine sichere Schraubverbindung zu schaffen.

Bevorzugt ist vorgesehen, dass das Bauteil aus Stahl, einer Leichtmetalllegierung oder aus Kunststoff mit einer Oberflächenhärte von gleich oder weniger als 200 HV ausgebildet ist. Die Sicherungsscheiben selbst können eine Oberflächenhärte von größer 200 HV aufweisen. Durch eine solche Paarung, insbesondere mit einer oberen Ringfläche der Sicherungsscheibe, welche einen verzahnten und einen unverzahnten Bereich umfasst, kann auch bei Bauteilen mit einer weichen Oberfläche eine hinreichende Sicherung geschaffen sein.

Vorteilhafterweise ist vorgesehen, dass die Breite des verzahnten Bereichs auf der oberen Ringfläche des Scheibenkörpers gleich oder größer als ein Durchmesser eines Schraubenkopfes bzw. einer umlaufenden Fläche an der Unterseite des Schraubenkopfes ausgebildet ist. Der Außendurchmesser der Sicherungsscheibe ist vorteilhafterweise gegenüber dem Außenumfang des Schraubenkopfes vergrößert ausgebildet. Dadurch kann die Flächenpressung zwischen der Verzahnung an der unteren Ringfläche und dem Bauteil verringert werden. Dies wirkt sich wiederum vorteilhaft dahingehend aus, dass sich die Verzahnung nicht zu tief in die Oberfläche des Bauteils eingräbt.

Des Weiteren ist bevorzugt vorgesehen, dass das Schraubteil mit einer Vorspannkraft zum Bauteil zur Sicherung des Schraubteils beaufschlagt ist und eine Sicherungsscheibe vorgesehen ist, bei welcher die Größe der Ringfläche vergrößert ausgebildet ist, so dass bei der Vorspannkraft zur Sicherung des Schraubteils zum Bauteil die wirkende Flächenpressung, welche sich aus der Vorspannkraft geteilt durch die Ringfläche der Sicherungsscheibe ergibt, einen Wert von kleiner als 200 N/mm² ergibt. Durch die Vergrößerung des Außendurchmessers der Sicherungsscheibe gegenüber standardisierten Sicherungsscheiben wird ermöglicht, dass die wirkende Flächenpressung reduziert ist. Insbesondere bei weichen Werkstoffen, bevorzugt bei solchen mit einer Härte von gleich oder kleiner 200 HV, ist dies besonders von Vorteil, da ein zu tiefes Eingraben der Sicherungsscheibe in dem Bauteil entgegengewirkt werden kann. Dennoch ist eine hinreichende Sicherung gegen selbständiges Lösen aufgrund des Eingriffs der Verzahnung der Sicherungsscheibe in das Bauteil ermöglicht.

Die Erfindung sowie weitere vorteilhafte Ausführungsformen und Weiterbildungen derselben werden im Folgenden anhand der in den Zeichnungen dargestellten Beispiele näher beschrieben und erläutert.

Es zeigen:
Figur 1 eine schematische Ansicht auf eine Unterseite einer Sicherungsscheibe,
Figur 2 eine schematische Schnittansicht der Sicherungsscheibe gemäß Figur 1,
Figur 3 eine schematische Ansicht von oben auf die Sicherungsscheibe gemäß Figur 1,
Figur 4 eine perspektivische Ansicht von oben auf die Sicherungsscheibe gemäß Figur 1
Figur 5 eine perspektivische Ansicht von unten auf die Sicherungsscheibe gemäß Figur 1
Figur 6 eine schematische Schnittansicht einer Schraubensicherung im ungespannten Zustand,
Figur 7 eine schematische Schnittansicht der Schraubensicherung gemäß Figur 6 im gespannten Zustand,
Figur 8 eine schematische Ansicht von oben auf eine alternative Schraubverbindung, und
Figur 9 eine schematische Ansicht von unten auf die Schraubverbindung gemäß Figur 8.

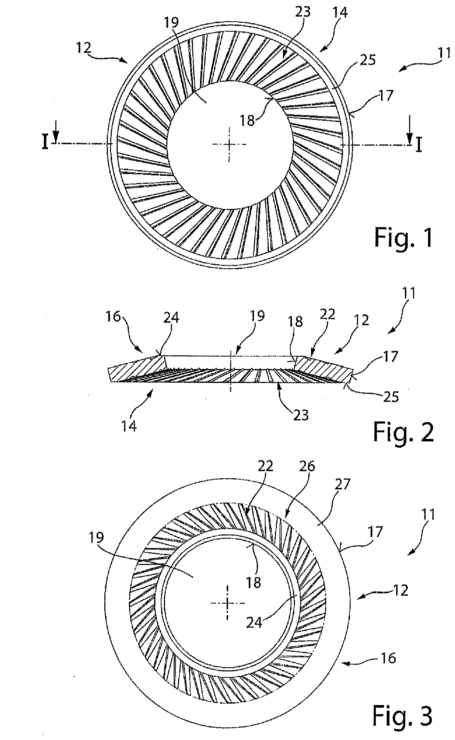

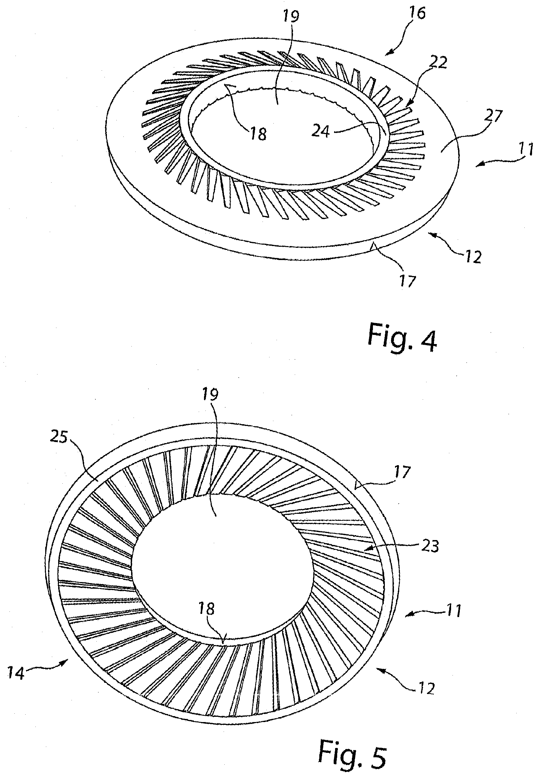

In Figur 1 ist eine schematische Ansicht von unten auf eine Sicherungsscheibe 11 dargestellt. Die Figur 2 zeigt eine schematische Schnittansicht entlang der Linie I-I in Figur 1. Die Figur 3 zeigt eine schematische Ansicht von oben auf die Sicherungsscheibe 11 gemäß Figur 1. Die Figur 4 zeigt eine perspektivische Ansicht von oben und die Figur 5 eine perspektivische Ansicht von unten auf die Sicherungsscheibe 11 gemäß Figur 1.

Diese Sicherungsscheibe 11 umfasst einen Scheibenkörper 12, der ringförmig ausgebildet ist. Dieser Scheibenkörper 12 umfasst eine untere Ringfläche 14, welche in Figur 1 dargestellt ist, sowie eine obere Ringfläche 16, welche in Figur 3 dargestellt ist. Die obere und untere Ringfläche 14, 16 sind jeweils durch einen umlaufenden Außenrand 17 und einen vorzugsweise konzentrischen Innenrand 18 begrenzt. Der Innenrand 18 begrenzt eine Aufnahmebohrung 19, welche zum Einsetzen eines Schraubteils 21 (Figur 4) vorgesehen ist. An der inneren Ringfläche 14 ist eine Verzahnung 23 vorgesehen, welche sich vollumfänglich erstreckt. Des Weiteren erstreckt sich die Verzahnung 23 über die gesamte Breite der Ringfläche 14, nämlich vom Innenrand 18 bis zum Außenrand 17.

An den Außenrand 17 angrenzend und in Richtung der Verzahnung 23 sich erstreckend ist eine untere Abflachung 25 vorgesehen, so dass die an den Außenrand 17 angrenzenden Zähne der Verzahnung 23 abgeflacht sind. Die Abflachung 25 kann eben oder gerundet sein. Die Verzahnung 23 an der Unterseite ist bevorzugt als eine Schrägverzahnung ausgebildet. Eine solche Verzahnung 23 kann durch Prägung herstellbar sein.

Die Sicherungsscheibe 11 gemäß den Figuren 1 bis 3 weist bevorzugt einen aufgestellten Scheibenkörper 12 auf. Dies geht aus der Schnittansicht gemäß Figur 2 hervor. Der Scheibenkörper 12 ist tellerfederartig ausgebildet. Ein Innenrand 18 des Scheibenkörpers 12 ist gegenüber einem Außenrand 17 erhöht ausgebildet. Dadurch kann diese Sicherungsscheibe 11 eine auf eine Schraubverbindung wirkende Verspannkraft erzeugen.

Die Draufsicht auf die obere Ringfläche 16 der Sicherungsscheibe 11 zeigt, dass ein verzahnter Bereich 26 und ein unverzahnter Bereich 27 vorgesehen ist. Der verzahnte Bereich 26 umfasst eine Verzahnung 22, die sich voll umfänglich innerhalb des verzahnten Bereichs 26 erstreckt. Dieser verzahnte Bereich 26 an der oberen Ringfläche 16 ist in der Breite jedenfalls kleiner als die Breite der oberen Ringfläche 16, also zwischen dem Außenrand 17 und dem Innenrand 16. Die Breite des verzahnten Bereichs 26 innerhalb der sich die Verzahnung 22 erstreckt, ist kleiner als die Verzahnung 23 an der unteren Ringfläche 14 ausgebildet, welche sich an der unteren Ringfläche 16 zwischen dem Innenrand 18 und dem Außenrand 17 erstreckt. Der verzahnte Bereich 26 erstreckt sich vollumfänglich auf der oberen Ringfläche 16. Der verzahnte Bereich 26 kann in eine obere Abflachung 24 übergehen, die sich bis zum Innenrand 18 erstreckt. Von dort aus erstreckt sich der verzahnte Bereich 26 in der Breite gesehen in Richtung auf den Außenrand 17. Zwischen dem verzahnten Bereich 26 und dem Außenrand 17 des Scheibenkörpers 12 erstreckt sich voll umlaufend der unverzahnte Bereich 27. Dieser unverzahnte Bereich 27 weist vorteilhafterweise eine ebene Oberfläche auf. Die Breite des verzahnten Bereichs 26 bzw. die des unverzahnten Bereichs 27 kann in Abhängigkeit von der Härte der Oberfläche des Bauteils 32 ausgewählt sein. Die Breite des verzahnten Bereichs 26 kann gleich groß, größer oder kleiner als die Breite des unverzahnten Bereichs 27 sein. Der verzahnte Bereich 26 ist bevorzugt ebenfalls als eine Schrägverzahnung ausgebildet. Die Ausgestaltung der Schrägverzahnung kann sowohl für die untere Ringfläche 14 als auch für den verzahnten Bereich 26 der oberen Ringfläche 16 gleich ausgebildet sein.

Die Sicherungsscheibe 11 ist bevorzugt aus einem Federstahl, einem hochfesten oder warmfesten oder korrosionsbeständigen Stahl ausgebildet. Die Sicherungsscheibe 11 kann eine Härte von größer 200 HV aufweisen.

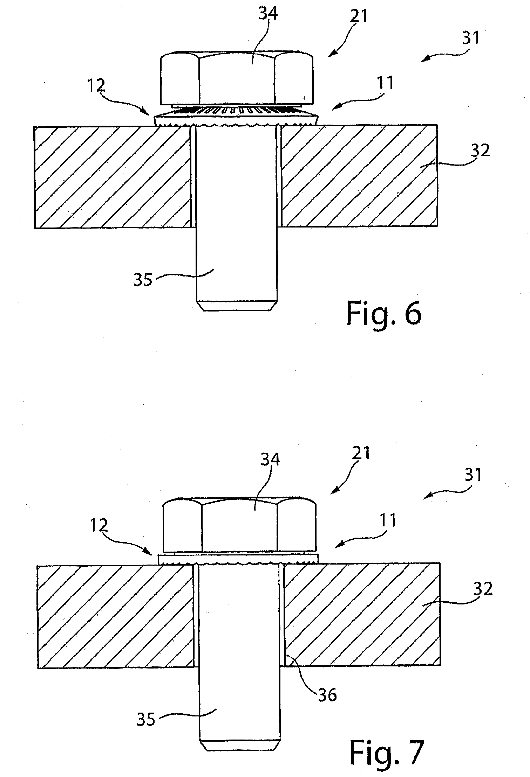

In Figur 6 ist eine Schraubverbindung 31 in einem ungespannten Zustand zwischen einem Bauteil 32 und dem Schraubteil 21 unter Zwischenschaltung der Sicherungsscheibe 11 dargestellt. Bei dieser ersten Ausführungsform ist das Schraubteil 21 als eine Schraube mit einem Schraubenkopf 34 und einem Gewinde 35 ausgebildet. Alternativ kann das Schraubteil 21 auch ein Gewindestift mit einer daran befestigten Mutter ausgebildet sein. In diesen Fällen umfasst das Bauteil 32 eine Gewindebohrung 36. Alternativ kann vorgesehen sein, dass das Bauteil 32 eine Durchgangsbohrung umfasst, so dass ein weiteres, nicht näher dargestelltes Bauteil durch eine Schraubverbindung mit einem Schraubteil 21, welches eine Schrauben-/Mutterkombination oder eine Gewindestift-/Mutter-Kombination umfasst, befestigt oder gehalten werden kann.

Der Schraubenkopf 34 des Schraubteils 21 weist an seiner zur Sicherungsscheibe 11 weisenden Seite bevorzugt einen umlaufenden ebenen Ringbund auf. Die Breite des verzahnten Bereichs 26 an der oberen Ringfläche 16 der Sicherungsscheibe 11 entspricht bevorzugt der Breite des Ringbundes an der Unterseite des Schraubteils 21. Der unverzahnte Bereich 27 erstreckt sich radial umlaufend über die Unterseite des Schraubteils 21 hinaus. Der Außenrand 17 der Sicherungsscheibe 11 ist im Durchmesser größer als der Schraubenkopf 34 des Schraubteils 21 ausgebildet.

Im gespannten Zustand der Sicherungsscheibe 11 gemäß Figur 7 greift die Verzahnung 23 formschlüssig an einer Oberfläche des Bauteils 32 ein. Gegenüberliegend wird ein Formschluss zwischen dem verzahnten Bereich 26 der Sicherungsscheibe 11 und einem Schraubenkopf bzw. dem Ringbund des Schraubenkopfes 34 des Schraubteils 21 erzielt. Zusätzlich erfolgt durch die Sicherungsscheibe 11 aufgrund der tellerfederartig gewölbten Geometrie einen vollständigen Kraftschluss der Schraubverbindung zwischen Bauteil 32 und Schraubteil 21.

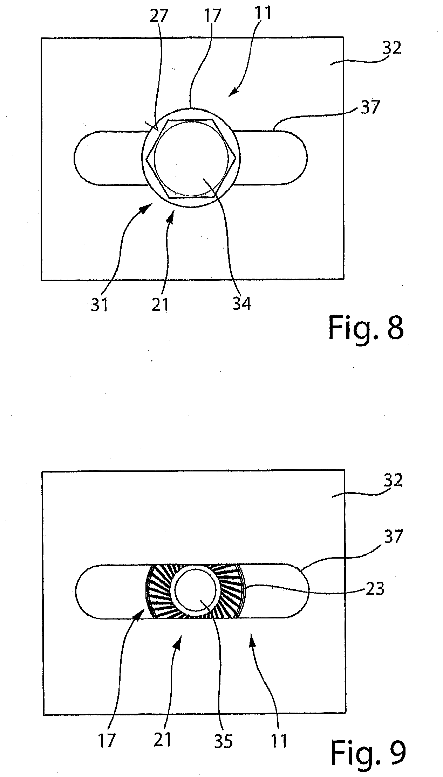

In Figur 8 ist eine schematische Ansicht von oben und in Figur 9 eine schematische Ansicht von unten auf eine alternative Ausführungsform der Schraubverbindung 31 dargestellt. Bei dieser Ausführungsform umfasst das Bauteil 32 eine Langlochbohrung 37. Die im Außendurchmesser vergrößert ausgebildete Sicherungsscheibe 11 weist den Vorteil auf, dass eine untere Ringfläche 14 sich benachbart zur Langlochbohrung 37 am Bauteil 32 abstützt und eine sichere formschlüssige Verbindung erzielen kann. Der verzahnte Bereich 26 an der Oberseite der Sicherungsscheibe 11 entspricht in der Breite beispielsweise dem Außenumfang einer Unterseite des Schraubteils 11.

## Patentansprüche

1. Sicherungsscheibe für eine Schraubverbindung (31) zwischen einem Schraubteil (21) und einem Bauteil (32),
- mit einem ringförmigen Scheibenkörper (12), der durch einen umlaufenden Außenrand (17) und einen Innenrand (18) begrenzt ist,
- mit einer durch den Innenrand (18) begrenzten Aufnahmebohrung (19), in die das Schraubteil (21) einsetzbar ist,
- mit einer an einer Oberseite des Scheibenkörpers (12) vorgesehenen oberen Ringfläche (16), welche eine Verzahnung (22) aufweist,
- mit einer an einer Unterseite des Scheibenkörpers (12) vorgesehenen unteren Ringfläche (14), welche eine Verzahnung (23) aufweist, welche sich voll umfänglich an der unteren Ringfläche erstreckt, **dadurch gekennzeichnet,**
- **dass** die Verzahnung (22) an der oberen Ringfläche (16) sich in einem verzahnten Bereich (26) erstreckt, welcher voll umfänglich ausgebildet ist,
- **dass** die Breite des verzahnten Bereiches (26) an der oberen Ringfläche (16) kleiner als die Breite des Scheibenkörpers (12) zwischen dem Außenrand (17) und dem Innenrand (18) ist,
- **dass** an der oberen Ringfläche (16) zwischen dem verzahnten Bereich (26) und dem Außenrand (17) ein unverzahnter Bereich (27) ausgebildet ist, - dass die Verzahnung (23) sich über die gesamte Breite der unteren Ringfläche (14) erstreckt, und
- **dass** die Verzahnung (22, 23) an der oberen und/oder unteren Ringfläche (14, 16) als eine Schrägverzahnung ausgebildet ist.

2. Sicherungsscheibe nach Anspruch 1, **dadurch gekennzeichnet, dass** die Breite des verzahnten Bereichs (26) an der oberen Ringfläche (16) kleiner als die Breite der Verzahnung (23) an der unteren Ringfläche (14) ausgebildet ist.

3. Sicherungsscheibe nach Anspruch 1 oder 2, **dadurch gekennzeichnet, dass** der verzahnte Bereich (26) einseitig von dem unverzahnten Bereich (27) umgeben ist.

4. Sicherungsscheibe nach einem der vorhergehenden Ansprüche, **dadurch gekennzeichnet, dass** der verzahnte Bereich (26) an der oberen Ringfläche (16) sich von dem Innenrand (18) des Scheibenkörpers (12) aus nur teilweise bis zum Außenrand (17) erstreckt und von dem unverzahnten Bereich (27) begrenzt ist, der sich von dem verzahnten Bereich (26) bis zum Außenrand (17) des Scheibenkörpers (12) erstreckt.

5. Sicherungsscheibe nach einem der vorhergehenden Ansprüche, **dadurch gekennzeichnet, dass** die Breite des verzahnten Bereichs (26) größer als die des unverzahnten Bereichs (27) ist oder dass die Breite des verzahnten Bereichs (26) gleich der Breite des unverzahnten Bereichs (27) ist oder dass die Breite des verzahnten Bereichs (26) kleiner als die Breite des unverzahnten Bereichs (27) ist.

6. Sicherungsscheibe nach einem der vorhergehenden Ansprüche, **dadurch gekennzeichnet, dass** der Scheibenkörper (12) tellerfederartig aufgestellt ist.

7. Sicherungsscheibe nach einem der vorhergehenden Ansprüche **dadurch gekennzeichnet, dass** der unverzahnte Bereich (26) als eine ebene Fläche ausgebildet ist.

8. Sicherungsscheibe nach einem der vorhergehenden Ansprüche, **dadurch gekennzeichnet,**
- **dass** an der unteren Ringfläche (14) an den Außenrand (17) angrenzend eine Abflachung (24) vorgesehen ist, welche eine äußere kreisrunde Begrenzung für die Verzahnung (23) bildet, die sich bis zum Innenrand (18) erstreckt und/oder
- **dass** die obere Ringfläche (16) an den Innenrand (18) angrenzend eine Abflachung (25) aufweist, welche eine innere kreisrunde Begrenzung für den verzahnten Bereich (26) bildet, die sich bis zum unverzahnten Bereich (27) erstreckt.

9. Sicherungsscheibe nach einem der vorhergehenden Ansprüche, **dadurch gekennzeichnet, dass** der Scheibenkörper (12) aus einem Federstahl, einem hochfesten oder warmfesten oder korrosionsbeständigen Stahl hergestellt ist, der vorzugsweise eine Härte von gleich oder größer 200 HV aufweist.

10. Schraubverbindung mit einem Bauteil (32) und einem dazu befestigbaren Schraubteil (21), welches als eine Schraube und/oder eine Schrauben-/Mutter-Kombination ausgebildet ist, sowie zumindest einer zwischen dem Bauteil (32) und dem Schraubteil (21) positionierten Sicherungsscheibe (11),
**dadurch gekennzeichnet,**
- **dass** die Sicherungsscheibe (11) nach einem der Ansprüche 1 bis 9 ausgebildet ist.

11. Schraubverbindung nach Anspruch 10, **dadurch gekennzeichnet, dass** das Bauteil (32) aus einem Stahl, einer Leichtmetalllegierung oder aus einem Kunststoff mit einer Oberflächenhärte von gleich oder kleiner 200 HV ausgebildet ist.

12. Schraubverbindung nach Anspruch 10 oder 11, **dadurch gekennzeichnet, dass** das Bauteil (32) eine Gewindebohrung (36), eine Durchgangsbohrung oder eine Langlochbohrung (37) aufweist.

13. Schraubverbindung nach Anspruch 10 bis 12, **dadurch gekennzeichnet, dass** die Breite des verzahnten Bereichs (26) auf der oberen Ringfläche (16) des Scheibenkörpers (12) gleich oder größer als ein Durchmesser eines Schraubenkopfes (34) oder einer umlaufenden Fläche an der Unterseite des Schraubkopfes (34) des Schraubteils (21) ist.

14. Schraubverbindung nach einem der Ansprüche 10 bis 13, **dadurch gekennzeichnet, dass** das Schraubteil (21) mit einer Vorspannkraft zum Bauteil zur Sicherung des Schraubteils (21) beaufschlagt ist und eine Sicherungsscheibe (11) vorgesehen ist, bei welcher die Größe der Ringfläche (14, 16) der Sicherungsscheibe (11) vergrößert ausgebildet ist, so dass bei der Vorspannkraft zur Sicherung des Schraubteils (21) zum Bauteil (22) die wirkende Flächenpressung, welche sich aus der Vorspannkraft geteilt durch die Ringfläche (14, 16) der Sicherungsscheibe (11) ergibt, einen Wert von kleiner 200 N/mm² aufweist.

## Claims

1. Lock washer for a screw connection (31) between a screw part (21) and a component (32),
- with an annular washer body (12) which is bounded by a circumferential outer edge (17) and an inner edge (18),
- with a receiving bore (19) delimited by the inner edge (18), into which the screw part (21) is insertable,
- with an upper annular surface (16) provided on an upper side of the washer body (12), which has a toothing (22),
- with a lower annular surface (14) provided on a lower side of the washer body (12), which has a toothing (23) which extends fully around the lower annular surface,
**characterized in,**
- **that** the toothing (22) on the upper annular surface (16) extends in a toothed region (26) which is fully circumferential,
- **that** the width of the toothed region (26) on the upper annular surface (16) is smaller than the width of the washer body (12) between the outer edge (17) and the inner edge (18),
- **that** a non-toothed region (27) is formed on the upper annular surface (16) between the toothed region (26) and the outer edge (17),
- **that** the toothing (23) extends over the entire width of the lower annular surface (14), and
- **that** the toothing (22, 23) on the upper and/or lower annular surface (14, 16) is formed as helical toothing.

2. Lock washer according to claim 1, **characterized in that** the width of the toothed region (26) on the upper annular surface (16) is smaller than the width of the toothing (23) on the lower annular surface (14) .

3. Lock washer according to claim 1 or 2, **characterized in that** the toothed region (26) is surrounded on one side by the non-toothed region (27).

4. Lock washer according to one of the preceding claims, **characterized in that** the toothed region (26) on the upper annular surface (16) extends from the inner edge (18) of the washer body (12) only partially to the outer edge (17) and is bounded by the non-toothed region (27), which extends from the toothed region (26) to the outer edge (17) of the washer body (12).

5. Lock washer according to one of the preceding claims, **characterized in that** the width of the toothed region (26) is greater than that of the non-toothed region (27) or that the width of the toothed region (26) is equal to the width of the non-toothed region (27) or that the width of the toothed region (26) is smaller than the width of the non-toothed region (27).

6. Lock washer according to one of the preceding claims, **characterized in that** the washer body (12) is set up like a plate spring.

7. Lock washer according to one of the preceding claims, **characterized in that** the non-toothed region (26) is designed as a flat surface.

8. Lock washer according to one of the preceding claims, **characterized in,**
- **that** a flattening (24) is provided on the lower annular surface (14) adjacent to the outer edge (17), which flattening forms an outer circular boundary for the toothing (23), which boundary extends to the inner edge (18) and/or
- **that** the upper annular surface (16) has a flattening (25) adjacent to the inner edge (18), which forms an inner circular boundary for the toothed region (26), which extends to the non-toothed region (27).

9. Lock washer according to one of the preceding claims, **characterized in that** the washer body (12) is made of a spring steel, a high-strength or heat-resistant or corrosion-resistant steel, which preferably has a hardness of equal to or greater than 200 HV.

10. Screw connection with a component (32) and a screw part (21) which is fastenable thereto and which is designed as a screw and/or a screw/nut combination, as well as at least one lock washer (11) positioned between the component (32) and the screw part (21), **characterized in**
- **that** the lock washer (11) is designed according to one of claims 1 to 9.

11. Screw connection according to claim 10, **characterized in that** the component (32) is formed from a steel, a light metal alloy or a plastic with a surface hardness of equal to or less than 200 HV.

12. Screw connection according to claim 10 or 11, **characterized in that** the component (32) has a threaded hole (36), a through hole or a slotted hole (37) .

13. Screw connection according to claim 10 to 12, **characterized in that** the width of the toothed region (26) on the upper annular surface (16) of the washer body (12) is equal to or greater than a diameter of a screw head (34) or a circumferential surface on the underside of the screw head (34) of the screw part (21).

14. Screw connection according to one of claims 10 to 13, **characterized in that** the screw part (21) is subjected to a pretensioning force to the component for securing the screw part (21) and a lock washer (11) is provided, in which the size of the annular surface (14, 16) of the lock washer (11) is enlarged, so that with the preload force for securing the screw part (21) to the component (22), the acting surface pressure, which results from the preload force divided by the annular surface (14, 16) of the lock washer (11) has a value of less than 200 N/mm2.

## Revendications

1. Rondelle de sécurité pour un assemblage vissé (31) entre une pièce vissée (21) et un composant (32),
- avec un corps de rondelle (12) de forme annulaire, qui est délimité par un bord extérieur (17) périphérique et un bord intérieur (18),
- avec un alésage de réception (19) délimité par le bord intérieur (18), dans lequel la pièce à visser (21) peut être insérée,
- avec une surface annulaire supérieure (16) prévue sur une face supérieure du corps de rondelle (12), qui présente une denture (22),
- avec une surface annulaire inférieure (14) prévue sur une face inférieure du corps de rondelle (12), laquelle présente une denture (23) qui s'étend sur toute la circonférence de la surface annulaire inférieure,
**caractérisé en ce,**
- **que** la denture (22) sur la surface annulaire supérieure (16) s'étend dans une zone dentée (26) qui est réalisée sur toute la périphérie,
- **que** la largeur de la zone dentée (26) sur la surface annulaire supérieure (16) est inférieure à la largeur du corps de rondelle (12) entre le bord extérieur (17) et le bord intérieur (18),
- **qu'**une zone non dentée (27) est formée sur la surface annulaire supérieure (16) entre la zone dentée (26) et le bord extérieur (17),
- **que** la denture (23) s'étend sur toute la largeur de la surface annulaire inférieure (14), et
- **que** la denture (22, 23) est réalisée sur la surface annulaire supérieure et/ou inférieure (14, 16) sous la forme d'une denture oblique.

2. Rondelle de sécurité selon la revendication 1, **caractérisée en ce que** la largeur de la zone dentée (26) sur la surface annulaire supérieure (16) est inférieure à la largeur de la denture (23) sur la surface annulaire inférieure (14).

3. Rondelle de sécurité selon la revendication 1 ou 2, **caractérisée en ce que** la zone dentée (26) est entourée d'un côté par la zone non dentée (27).

4. Rondelle de sécurité selon l'une des revendications précédentes, **caractérisée en ce que** la zone dentée (26) sur la surface annulaire supérieure (16) ne s'étend que partiellement depuis le bord interne (18) du corps de rondelle (12) jusqu'au bord externe (17) et est délimitée par la zone non dentée (27) qui s'étend depuis la zone dentée (26) jusqu'au bord externe (17) du corps de rondelle (12).

5. Rondelle de sécurité selon l'une des revendications précédentes, **caractérisée en ce que** la largeur de la zone dentée (26) est supérieure à celle de la zone non dentée (27) ou **en ce que** la largeur de la zone dentée (26) est égale à la largeur de la zone non dentée (27) ou **en ce que** la largeur de la zone dentée (26) est inférieure à la largeur de la zone non dentée (27).

6. Rondelle de sécurité selon l'une des revendications précédentes, **caractérisée en ce que** le corps de rondelle (12) est monté à la manière d'un ressort d'assiette.

7. Rondelle de sécurité selon l'une des revendications précédentes, **caractérisée en ce que** la zone non dentée (26) est conçue comme une surface plane.

8. Rondelle de sécurité selon l'une des revendications précédentes, **caractérisée en ce,**
- **qu'**il est prévu sur la surface annulaire inférieure (14), adjacente au bord extérieur (17), un méplat (24) qui forme une limite circulaire extérieure pour la denture (23) et qui s'étend jusqu'au bord intérieur (18) et/ou
- **que** la surface annulaire supérieure (16) présente, de manière adjacente au bord intérieur (18), un méplat (25) qui forme une délimitation circulaire intérieure pour la zone dentée (26), laquelle s'étend jusqu'à la zone non dentée (27).

9. Rondelle de sécurité selon l'une quelconque des revendications précédentes, **caractérisée en ce que** le corps de rondelle (12) est fabriqué à partir d'un acier à ressort, d'un acier à haute résistance ou résistant à la chaleur ou à la corrosion, qui présente de préférence une dureté égale ou supérieure à 200 HV.

10. Assemblage vissé comprenant un composant (32) et une pièce vissée (21) pouvant être fixée à celui-ci, qui est conçue comme une vis et/ou une combinaison vis/écrou, ainsi qu'au moins une rondelle de sécurité (11) positionnée entre le composant (32) et la pièce vissée (21),
**caractérisé en ce,**
- **que** la rondelle de sécurité (11) est réalisée selon l'une des revendications 1 à 9.

11. Assemblage vissé selon la revendication 10, **caractérisé en ce que** la pièce (32) est réalisée en un acier, en un alliage de métaux légers ou en une matière plastique ayant une dureté superficielle égale ou inférieure à 200 HV.

12. Assemblage vissé selon la revendication 10 ou 11, **caractérisé en ce que** la pièce (32) présente un trou taraudé (36), un trou traversant ou un trou oblong (37) .

13. Assemblage vissé selon les revendications 10 à 12, **caractérisé en ce que** la largeur de la zone dentée (26) sur la surface annulaire supérieure (16) du corps de rondelle (12) est égale ou supérieure à un diamètre d'une tête de vis (34) ou d'une surface périphérique sur la face inférieure de la tête de vis (34) de la pièce vissée (21).

14. Assemblage vissé selon l'une des revendications 10 à 13, **caractérisé en ce que** la pièce vissée (21) est soumise à une force de précontrainte par rapport au composant pour bloquer la pièce vissée (21) et **en ce qu'**il est prévu une rondelle de blocage (11) dans laquelle la taille de la surface annulaire (14, 16) de la rondelle de sécurité (11) est agrandie, de sorte que, lors de la force de précontrainte pour le blocage de la pièce vissée (21) par rapport au composant (22), la pression superficielle active, qui résulte de la force de précontrainte divisée par la surface annulaire (14, 16) de la rondelle de sécurité (11), présente une valeur inférieure à 200 N/mm2.
